# EUROPÄISCHE PATENTANMELDUNG

(11) **EP 1 530 272 A2**
(43) Veröffentlichungstag der Anmeldung: **11.05.2005**
(21) Anmeldenummer: 04405391.6
(22) Anmeldetag: 23.06.2004
(51) Int. Cl.: H02G 3/04

(54) **Montagevorrichtung für Kabelführungsvorrichtungen**

(30) Priorität: 25.10.2003 CH 18252003
(71) Anmelder: ZURECON AG, CH-8003 Zürich (CH)
(72) Erfinder: Pfluger, Gerd, 4625 Oberbuchsiten (CH)
(74) Vertreter: RUTZ & PARTNER

(57) **Zusammenfassung**

Die Montagevorrichtung (1), die lösbar mit einer Kabelführungsvorrichtung (5) verbindbar ist, dient zum Halten und/oder Ordnen wenigstens eines in der Kabelführungsvorrichtung (5) geführten Kabels (91, 92). Erfindungsgemäss weist die Montagevorrichtung (1) wenigstens ein mit einem Randstück (5101) der Kabelführungsvorrichtung (5) formschlüssig verbindbares Form- bzw. Fussteil (12; 14) und wenigstens ein Federteil (11; 13) auf, mittels dessen das Fussteil (12; 14) gegen das Randstück (5101) anpressbar ist, wodurch die Montagevorrichtung (1) schraubenlos fixierbar ist und leicht wieder gelöst werden kann.

## Beschreibung

Die Erfindung betrifft eine Montagevorrichtung für Kabelführungsvorrichtungen nach dem Oberbegriff des Patentanspruchs 1.

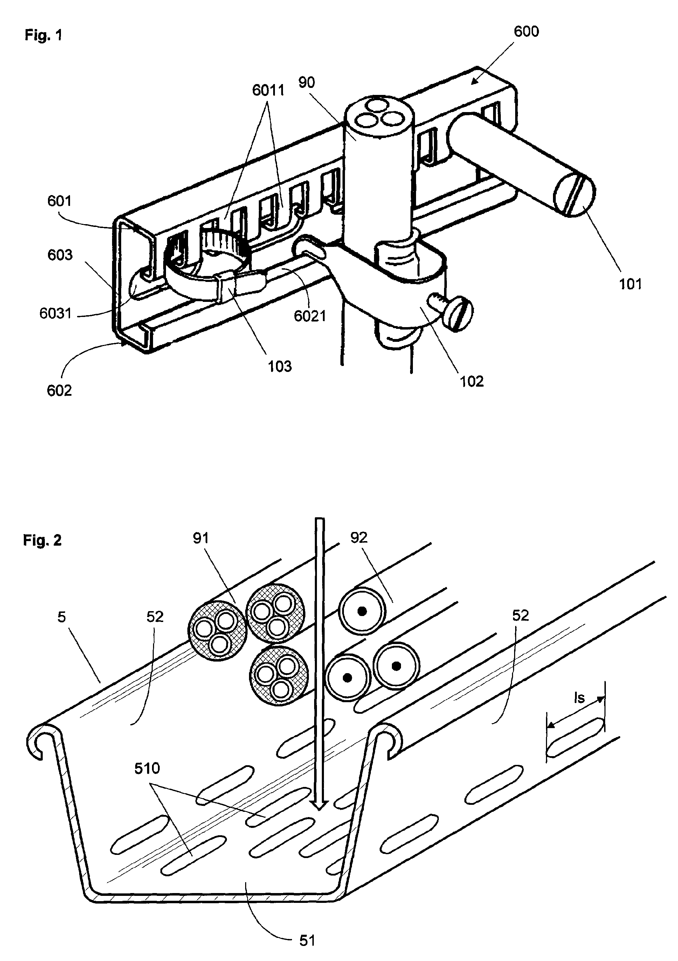

Kabelführungsvorrichtungen sind beispielsweise in [1] , Produktkatalog der LANZ OENSINGEN AG, April 2003; Seiten 34-36 und Seite 49 beschrieben. Die in [1], Seiten 34-37 beschriebenen Kabelführungsvorrichtungen betreffen so genannte Weitspann-Multibahnen, die Seitenelemente aufweisen, welche mittels Sprossen, vorzugsweise C- Sprossen oder Kombisprossen (siehe [1], Seite 47), verbunden sind, auf die die zu verlegenden Kabel aufgelegt werden. In weiteren Ausgestaltungen der Weitspann-Multibahnen wird zuerst ein gelochtes Bodenblech auf die Sprossen gelegt, bevor die Kabel eingelegt werden. Die in [1] , Seite 49 beschriebenen Kabelführungsvorrichtungen betreffen Kabelkanäle, die, wie nachstehend in Figur 2 gezeigt, ein aus einem gelochten Blech gebildetes U-Profil aufweisen.

In der Regel werden in ein- und dieselbe Kabelführungsvorrichtung Kabel verschiedenster Funktionen, wie Leitungen des Normalnetzes, Leitungen der unterbruchsfreien Stromversorgung, Leitungen von Daten- und Kommunikationsnetzen oder Steuersystemen, parallel verlegt. Falls Starkstrom- und Schwachstromkabel ungeordnet oder kreuzweise in den Kabelführungsvorrichtungen zu liegen kommen, können Störungen in den zugehörigen Kommunikations- oder Datennetzen auftreten. Ferner sind Nachinstallationen, bei ungeordneter Verlegung der Kabel, nur mit entsprechendem Aufwand möglich.

Zur geordneten Verlegung und zum Halten der Kabel werden daher Montagevorrichtungen, beispielsweise die in [1], Seiten 45-47 oder nachstehend in Figur 1 gezeigten Ordnungstrennbolzen 101 und Schnellverleger 102 verwendet, die beispielsweise an einer Kombisprosse montierbar sind.

Die nachstehend in Figur 1 gezeigte Kombisprosse 600 weist ein C-Profil mit einem mit Öffnungen 6301 versehenen Mittelstück 603 und zwei daran anschliessenden unterschiedlich ausgestalteten Profilseiten 601, 602 auf. Die erste Profilseite 601 ist durchgehend mit Stegen 6011 versehen, die der Befestigung von Kabelbindern 103 und dem Einschrauben von Ordnungstrennbolzen 101 dienen, mittels denen die verlegten Kabel 90 geordnet werden können. Die zweite Profilseite 602 weist eine durchgehend verlaufende, nach innen gekrümmte Abkantung 6021 auf, in die ein zum Halten eines Kabels 90 dienender Schnellverleger 102 eingehängt und festgeschraubt ist.

Der in Figur 1 gezeigte asymmetrisch ausgestaltete, sattelförmige Schnellverleger 102 weist eine mittels einer Schraube gegen das darin gehaltene Kabel 90 verschiebbare Andruckplatte, sowie zwei mit Haken versehene Seitenstücke auf, die beispielsweise in die Abkantung 6021 der Kombisprosse 600 eingehängt, und anschliessend verschraubt werden können.

Nachteilig bei den beschriebenen Montagevorrichtungen sind insbesondere der durch die Verwendung von Schrauben verursachte hohe Herstellungsaufwand, sowie der erhebliche Montageaufwand. Zur Montage der Vorrichtungen ist ein Werkzeug, normalerweise ein Schraubenzieher, notwendig. Die Schrauben werden mit entsprechendem Aufwand festgezogen. Dadurch entstehen starre, unelastische Verbindungen und bei den Schnellverlegern ein gegebenenfalls störender Druck auf die Kabel, durch den die Kabeleigenschaften beeinträchtigt werden können. Durch thermische verursachte Dehnungen, Relaxationen der Kabelhüllen oder Vibrationen können sich die geschraubten Verbindungen unter Umständen lösen. Nach der Installation, insbesondere aufgrund von Oxydation und Einwirkungen von Schmutz und Feuchtigkeit, ist es ferner möglich, dass die geschraubten Verbindungen kaum mehr gelöst werden können, so dass die nachträgliche Änderung der Installation wiederum mit hohem Material- und Arbeitsaufwand verbunden ist.

Der vorliegenden Erfindung liegt die Aufgabe zugrunde, eine verbesserte Montagevorrichtung für Kabelführungsvorrichtungen zu schaffen. Insbesondere sind universell einsetzbare Montagevorrichtungen zu schaffen, die kostengünstig herstellbar, mit geringem Aufwand stabil montierbar, und auch nach längerer Zeit wieder demontierbar sind.

Diese Aufgaben werden mit einer Vorrichtung gelöst, welche die in Anspruch 1 angegebenen Merkmale aufweist. Vorteilhafte Ausgestaltungen der Erfindung sind in weiteren Ansprüchen angegeben.

Die Montagevorrichtung, die lösbar mit einer Kabelführungsvorrichtung verbindbar ist, dient dem Halten und/oder Ordnen wenigstens eines in der Kabelführungsvorrichtung geführten Kabels. Erfindungsgemäss weist die Montagevorrichtung wenigstens ein mit einem Randstück der Kabelführungsvorrichtung formschlüssig verbindbares Formteil, und wenigstens ein Federteil auf, mittels dessen das Formteil gegen das Randstück anpressbar ist, wodurch die Montagevorrichtung schraubenlos fixierbar ist und leicht wieder gelöst werden kann.

Die Kabelführungsvorrichtung ist beispielsweise ein mit Öffnungen versehener Kabelkanal, eine Kabelpritsche oder eine Kabelbahn mit zwischen Seitenprofilen gehaltenen, Öffnungen oder Abkantungen aufweisen Sprossen. Die an die Öffnungen angrenzenden Randzonen oder die Abkantungen der Sprossen können daher als Flanschelement bzw. Randstück verwendet werden, mit dem ein Formteil formschlüssig verbunden wird. Die erfindungsgemässe Verwendung von gelochten oder mit Abkantungen versehenen Sprossen erlaubt die Installation der Montagevorrichtungen in Kabelleitern. Dies hat ferner den Vorteil, dass störende Flüssigkeiten durch die Öffnungen aus den Sprossen entweichen können.

Zu deren Installation wird die Montagevorrichtung in einer ersten Ausgestaltung soweit durch eine Öffnung hindurch geschoben, bis das Formteil am Randstück anstösst und dieses gegebenenfalls teilweise umschliesst. In einer zweiten Ausgestaltung der Montagevorrichtung wird das Formteil durch die Öffnung hindurch geführt und über das Randstück verschoben oder am End- oder Randstück der Sprosse eingehängt. Mittels des Federteils wird das Formteil anschliessend gegen das Randstück angedrückt und fixiert.

Durch manuelles Zusammenpressen des Federteils kann die Montagevorrichtung rasch montiert und demontiert werden. Dies erlaubt eine rasche und geordnete Verlegung und Fixierung der in die Kabelführungsvorrichtung einzulegenden Kabel. Aufgrund der leichten Demontierbarkeit sind Installationsänderungen zu einem späteren Zeitpunkt problemlos möglich. Ferner können die Montagevorrichtungen auch dann problemlos montiert werden, wenn die Kabel bereits in die Kabelführungsvorrichtung eingelegt wurden. In der ersten Ausgestaltung der Montagevorrichtung kann das keilförmige Federteil nämlich von unten durch eine in der Kabelführungsvorrichtung vorgesehene Öffnung in den zur Führung der Kabel dienenden Bereich der Kabelführungsvorrichtung eingeführt und fixiert werden, ohne dass die Kabel zuvor entfernt werden.

Die Montagevorrichtung in der zweiten Ausgestaltung wird normalerweise von oben in die Kabelführungsvorrichtung eingeführt, wobei vorzugsweise ein Kabel erfasst und mittels des Federteils elastisch gehalten wird, ohne dessen Eigenschaften zu beeinträchtigen. Bei dieser Ausgestaltung werden die Montagevorrichtung und das Kabel jeweils gleichzeitig fixiert, so dass ein minimaler Aufwand resultiert. Ein Verschrauben der Vorrichtung entfällt bei beiden Ausgestaltungen der Montagevorrichtung, so dass diese ohne Werkzeug montiert werden können.

Die Montagevorrichtung ist zudem einfach und kostengünstig aufgebaut. In der ersten Ausgestaltung wird die Montagevorrichtung vorzugsweise aus einem Stück gefertigt, wobei das Federteil integrierender Bestandteil der Vorrichtung ist. In der zweiten Ausgestaltung sind ein separates Federteil, vorzugsweise eine Spiralfeder, und eine Andruckplatte vorgesehen. Durch die Vermeidung von Schrauben kann zudem ein kompakterer Aufbau mit reduzierten Abmessungen realisiert werden.

Nachfolgend wird die Erfindung anhand von Zeichnungen näher erläutert. Dabei zeigen:
- Figur 1: die eingangs beschriebene, mit verschraubbaren Montagevorrichtungen 101, 102 versehene Kombisprosse 600,
- Figur 2: den eingangs beschriebene Kabelkanal 5,
- Figur 3a/b: aus Federstahl gefertigte erste Montagevorrichtungen 1a, 1b in unterschiedlichen Ausgestaltungen;
- Figur 3c: eine aus Kunststoff gefertigte erste Montagevorrichtung 1c;
- Figur 4: einen Teil eines zur Fertigung der Montagevorrichtung 1 vorgesehenen band- bzw. plattenförmigen, federelastischen Stahlelements;
- Figur 5a: eine erfindungsgemässe erste Montagevorrichtung 1 vor dem Einschieben in eine Öffnung 510 der Kabelbahn 5 von Figur 2;
- Figur 5b: die erste Montagevorrichtung 1 nach dem Einschieben in die Öffnung 510;
- Figur 6: in einen Kabelkanal 5 eingesetzte erste Montagevorrichtungen 1;
- Figur 7: den Kabelkanal 5 von unten gesehen mit der eingesetzten ersten Montagevorrichtung 1;
- Figur 8: die beiden Seitenteile 62 und eine erfindungsgemäss mit Öffnungen 610 versehene Sprosse 61 einer Kabelpritsche 6;
- Figur 9: in die Sprosse 61 von Figur 8 eingesetzte erste Montagevorrichtungen 1;
- Figur 10: eine zweite Montagevorrichtung 2 in Einzelteile zerlegt;
- Figur 11: die zweite Montagevorrichtung 2 zusammengebaut und, schematisch dargestellt, in die Sprosse 61 von Figur 8 eingehängt und ein Kabel 90 haltend;
- Figur 12: die Sprosse 61 der Kabelpritsche 6 von Figur 8 mit schraubenlos befestigten Halteklammern 3,
- Figur 13: die Sprosse 61 der Kabelpritsche 6 von Figur 8 mit einer schraubenlos befestigten Gegenwanne 4,

Figur 1 zeigt die eingangs beschriebene, mit verschraubbaren Montagevorrichtungen 101, 102 versehene Kombisprosse 600.

Figur 2 zeigt den eingangs beschriebenen Kabelkanal 5 mit Kabeln 91, 92, die geordnet zu verlegen sind.

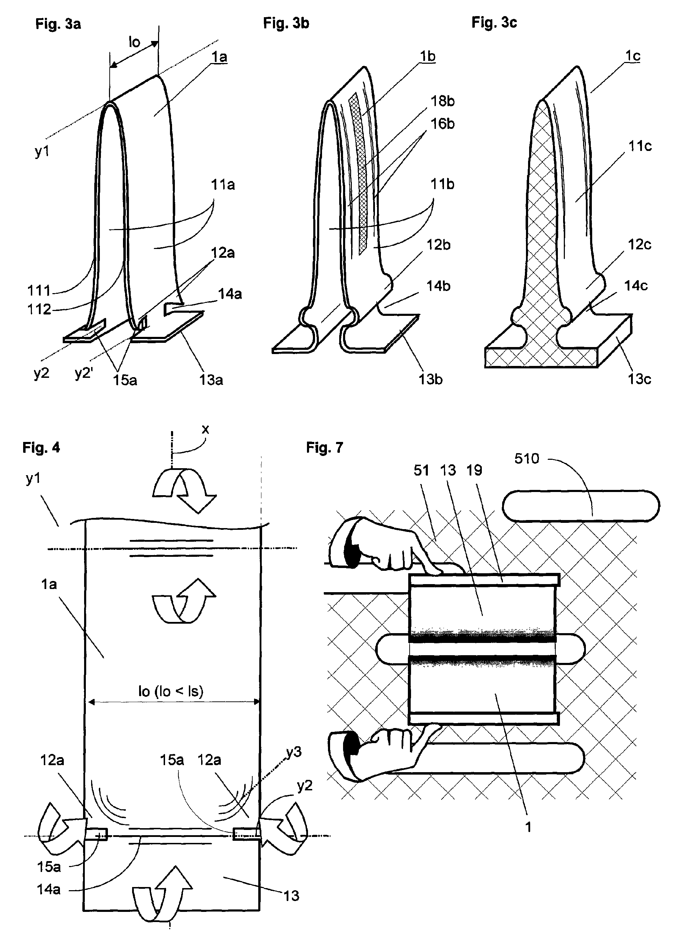

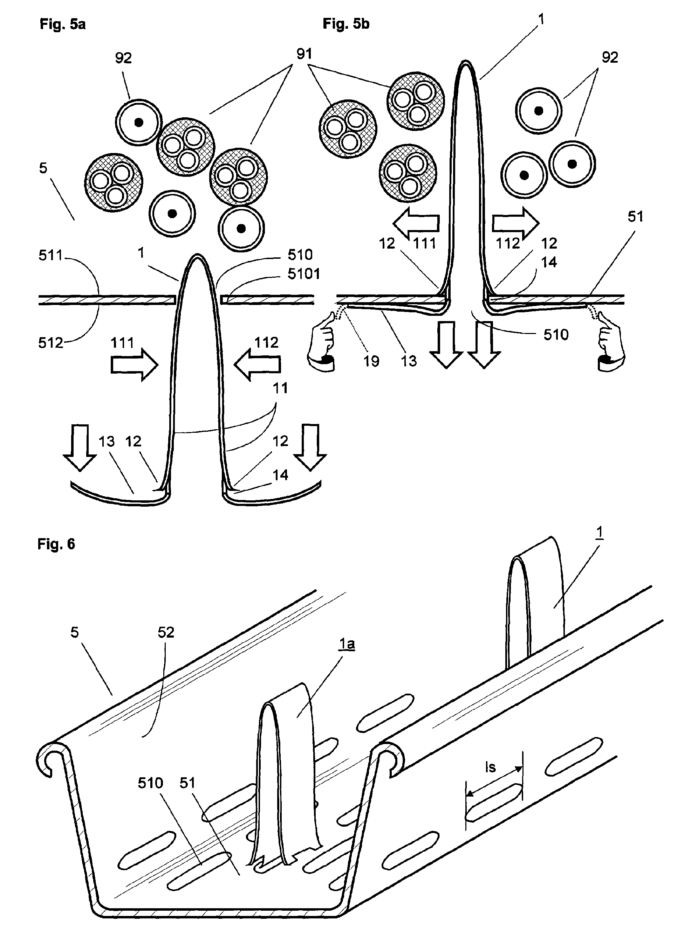

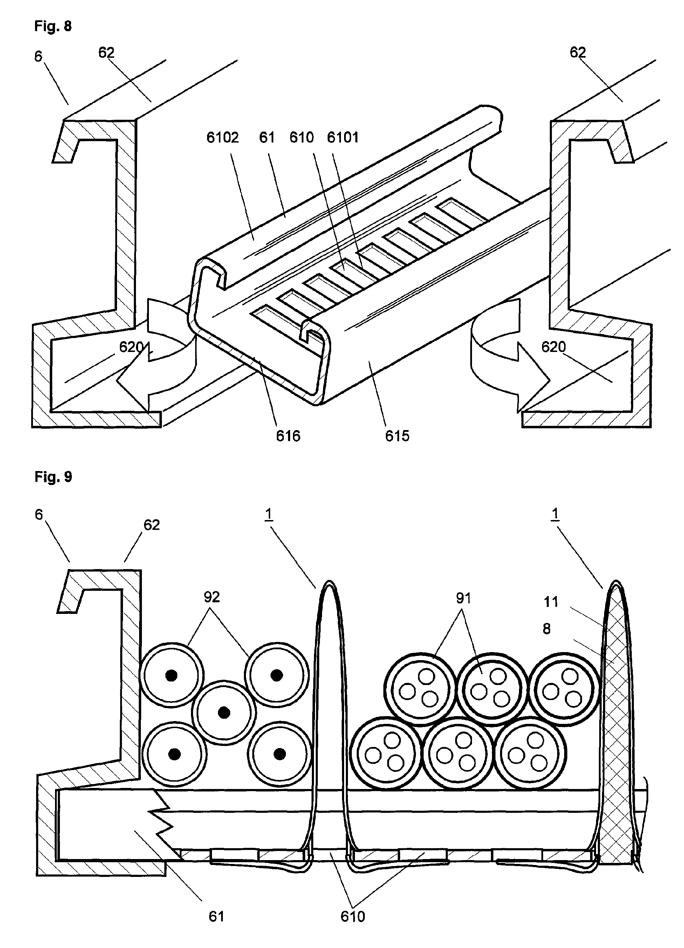

Die Figuren 3a und 3b zeigen zwei erfindungsgemässe, aus einem federelastischen Stahlelement (siehe Figur 7) gefertigte, symmetrisch ausgestaltete erste Montagevorrichtungen 1a, 1b, die ein in eine Öffnung 510, 610 einer Kabelführungsvorrichtung 5, 6 (siehe Figur 5 und Figur 9) einführbares Keilelement 11a; 11b aufweisen. An beiden Enden des bearbeiteten, band- oder plattenförmigen Stahlelements bzw. an der Unterseite des gefertigten Keilelements 11a; 11b sind nicht durch eine Öffnung 510 führbare, nach aussen abgewinkelte Fusselemente 13a; 13b und, etwas höher gelegen, durch die Öffnung 510 führbare, nach aussen ragende Arretierelemente 12a; 12b vorgesehen. Zwischen den Fusselementen 13a; 13b und den Arretierelementen 12a; 12b ist ein Formteil 14a; 14b vorgesehen, das nach dem Einschieben der Montagevorrichtung 1a; 1b mittels des als Federteil dienenden Keilelements 11a; 11b gegen den Rand 5101 der Öffnung 510 angepresst wird, wobei die Fusselemente 13a; 13b und die Arretierelemente 12a; 12b den Rand 5101 der Öffnung 510 an der Unterseite 512 und Oberseite 511 überlappen (siehe Figur 5).

Bei der Montagevorrichtung 1a von Figur 3a ist oberhalb der Fusselemente 13a ein seitlicher Einschnitt 15a vorgesehen und das darüber liegende Teil zur Bildung des Arretierelements 12a nach aussen gebogen.

Bei der Montagevorrichtung 1b von Figur 3b wurden die Arretierelemente 12b durch Verformung oder Biegung des Stahlelements geschaffen, wobei oberhalb der Fusselemente 13b vorzugsweise nach aussen weisende Rillen 12c oder Nocken in das Stahlelement eingeprägt sind. Zur Vermeidung störender Kanten, welche die eingelegten Kabel 90, 91 verletzen könnten, weist das Keilelement 11b Verrundungen 16b auf. Zur Versteifung des Keilelements 11b sind ferner Rippen 18b vorgesehen.

Figur 3c zeigt eine weitere erste Montagevorrichtung 1c, die beispielsweise mittels eines Extrusionsverfahrens aus Kunststoff gefertigt wurde. Das Profil der Montagevorrichtung 1c entspricht dem Profil der in Figur 3b gezeigten Montagevorrichtung 1b. Das Arretierelement 12c ist beidseitig gerundet, so dass die Montagevorrichtung 1c problemlos in eine Öffnung 510 eingeschoben und wieder entfernt werden kann.

Figur 4 zeigt eine Hälfte eines bandförmigen Stahlelements, das zur Fertigung der Montagevorrichtung 1a von Figur 3a vorgesehen ist. Die Breite lo des Stahlelements ist vorzugsweise wenig kleiner gewählt als die Länge ls (siehe Figur 2) der schlitzförmigen Öffnungen 510 des Kabelkanals 5. Zur Bildung des Keilelements 11a wird das Stahlelement in der Mitte um eine Biegeachse y1 beidseitig nach unten und dessen Enden zur Bildung der Fusselemente 13a um je eine Biegeachse y2, y2' in entgegen gesetzten Richtungen nach aussen gebogen, so dass das Keilelement 11a zwei miteinander verbundene federelastische Beine 111, 112 aufweist, die gegeneinander gedrückt werden können (siehe auch Figur 3a). Die genannten Biegeachsen y1, y2, y2' sind parallel zueinander ausgerichtet. In Figur 4 sind ferner die Einschnitte 15a gezeigt über denen je ein Teil des Stahlelements, zur Bildung der Arretierelemente 12a, um eine weitere Biegeachse y3 nach aussen gebogen wird.

Figur 5a zeigt das Einführen des Keilelements 11 einer Montagevorrichtung 1 in eine Öffnung 510 eines Kabelkanals 5. Durch das Einschieben des Keilelements 11 werden dessen Beine 111, 112 zusammengedrückt. Bei weiterem Einschieben werden die beidseitig vorgesehenen Arretierelemente 12 durch die Öffnung 510 hindurch geführt und anschliessend soweit nach aussen über den an die Öffnung 510 angrenzenden Rand 5101 geschoben, bis das dazwischen liegende Formteil 14 mittels den federelastischen Beinen 111, 112 gegen den Rand 5101 angepresst wird (siehe Figur 5b).

Figur 5b zeigt ferner eine vorzugsweise Ausgestaltung der Fusselemente 13. Durch entsprechende Biegung sind die Fusselemente 13 zu weiteren Federteilen geformt, welche die als weitere Formteile dienenden Arretierelemente 12 nach der Montage gegen den Rand 5101 der Öffnung 510 pressen, so dass die Montagevorrichtung 1 spielfrei gehalten wird. Die Montagevorrichtung 1 wird daher durch das Formteil 14 und die Arretierelemente 12 in zwei verschiedenen Richtungen formschlüssig gehalten.

Aus Figur 5b ist ersichtlich, dass die Montagevorrichtung 1 von oben, durch Zusammendrücken der Beine 111, 112 des Keilelements 11, oder von unten, durch Zusammendrücken der beiden Fusselemente 13 wieder gelöst werden kann. Zum einfacheren Erfassen der Fusselemente 13 werden deren Enden 19 vorzugsweise abgewinkelt. Dies erlaubt die bequeme Montage und Demontage der Montagevorrichtung 1, insbesondere bei Nachinstallationen, wenn im Kabelkanal 5 bereits Kabel 91, 92 verlegt sind (siehe Figur 7).

Figur 6 zeigt den Kabelkanal 5 von Figur 2 mit zwei montierten Montagevorrichtungen 1, die als Ordnungstrennelemente dienen. Durch den Einschub mehrerer Montagevorrichtungen 1 kann die Wirkung eines Ordnungstrennprofils erzielt werden. Durch versetzte Montage der Montagevorrichtungen 1 kann im Bereich von Kurven und Kreuzungen der Kabelverlauf bestimmt werden.

Figur 7 zeigt den Kabelkanal 5 und die eingesetzte erste Montagevorrichtung 1 von unten. Dabei ist ersichtlich, dass die Montagevorrichtung 1 durch Zusammenpressen der Fusselemente 13, die an den abgewinkelten Enden 19 erfasst werden können, rasch demontiert werden kann.

Figur 8 zeigt eine weitere Kabelführungsvorrichtung, nämlich eine aus zwei Seitenteilen 62 und C-Profil-Sprossen 61 bestehende Kabelpritsche 6. Erfindungsgemäss sind die Sprossen 61 mit Öffnungen 610 versehen, in die Montagevorrichtungen einsetzbar sind. Die Verwendung von entsprechend gelochten oder mit Abkantungen versehenen Sprossen 61 hat dabei den Vorteil, dass erfindungsgemässe Montagevorrichtungen auch in Kabelpritschen einsetzbar sind und diese durch deren Profil gegebenenfalls noch seitlich stützen. Das Profil der Sprossen 61 kann den jeweiligen Bedürfnissen angepasst werden. Die Profilenden 6102 können einfach oder mehrfach gebogen und gegebenenfalls mit Verzahnungen versehen sein, um Montagevorrichtungen sicherer und unverschiebbar einhängen zu können.

Figur 9 zeigt die Kabelpritsche 6 mit einer montierten, nach oben geöffneten Sprosse 61, in die zwei Montagevorrichtungen 1 eingesetzt sind, mittels denen zwei Arten von Kabel 91, 92 voneinander getrennt sind. In der gezeigten Montageform werden die eingesetzten Montagevorrichtungen 1 durch die Seitenwände des C-Profils der Sprosse 61 beidseitig stabil gehalten und gegen ein Abkippen nach vorn oder hinten geschützt.

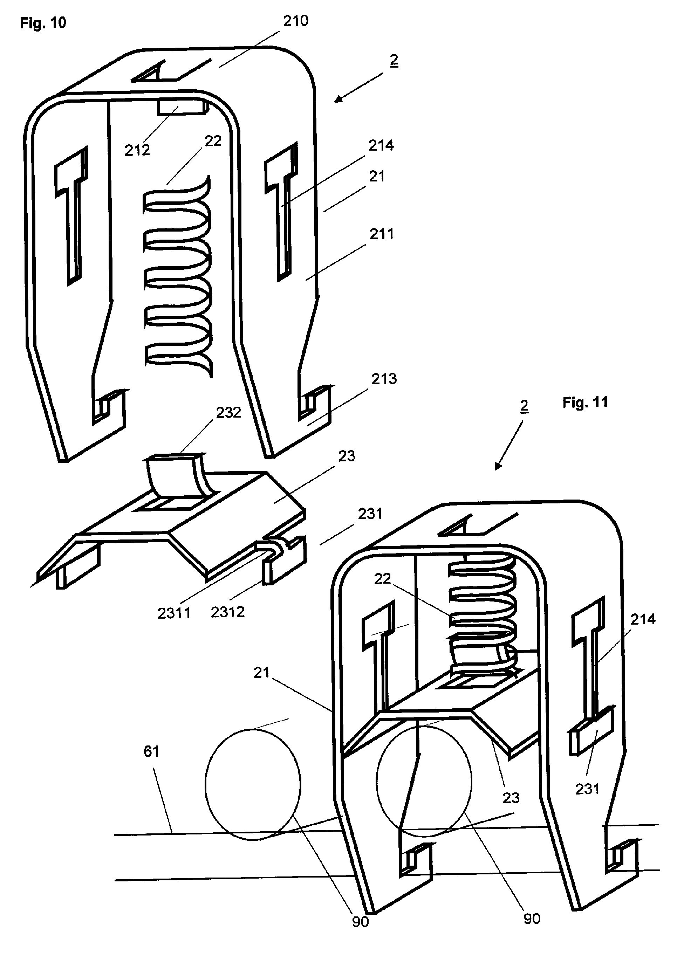

Die Figuren 10 und 11 zeigen eine Montagevorrichtung 2 in einer zweiten Ausgestaltung, die eine U-profilförmige Halterung 21 mit zwei Seitenteilen 211 aufweist, die einerseits durch ein Mittelteil 210 miteinander verbunden sind, und die andererseits je ein mit der Kabelführungsvorrichtung 5 bzw. 6 formschlüssig verbindbares Form- bzw. Fussteil 213 aufweisen. Die L- oder hakenförmig ausgestalteten Fussteile 213 können durch Öffnungen 510; 601 in einem Kabelkanal 5 oder in einer Sprosse 61 eingeschoben und am angrenzenden Rand 5101, 6101 der Öffnungen 510; 601 eingehängt werden. Möglich ist ferner, die Fussteile 213 am End- oder Randstück einer Sprosse 61 einzuhängen. Selbstverständlich sind weitere Ausgestaltungen der Fussteile 213 realisierbar.

Zwischen den beiden Seitenteilen 211 ist eine mit Führungselementen 231 versehene Andruckplatte 23 mittels Führungsschlitzen 214 verschiebbar gelagert, die T-förmig in die Seitenteile 211 eingestanzt sind. Die Führungselemente 231 weisen einen im Führungsschlitz 214 verschiebbaren Steg 2311 und ein plattenförmiges Kopfstück 2312 auf, welches durch den Führungsschlitz 214 hindurch geführt und abgewinkelt wird, um zu verhindern, dass die Andruckplatte 23 sich aus den Führungsschlitzen 214 lösen kann. Das montierte Kopfstück 2312 überlappt beidseitig den Randbereich des Führungsschlitzes 214 und dient so der Führung der Andruckplatte 23 in waagrechter Position. Zwischen das Mittelteil 210 und die Andruckplatte 23 wird eine Spiralfeder 22 eingefügt, welche die Andruckplatte 23 im Führungsschlitz 214 an den unteren Anschlag drückt. Dazu sind im Mittelteil 21 und in der Andruckplatte 23 je ein Halteelement 212 bzw. 232 eingearbeitet, beispielsweise ausgestanzt, mittels denen die Enden der Spiralfeder 22 gehalten sind. Die Spiralfeder 22 drückt die Andruckplatte 23 vorzugsweise mit einer Vorspannung gegen den Endanschlag des Führungsschlitzes 214, so dass diese auch vor der Installation stabil gehalten ist und auch bei kleinen Kabeldurchmessern bereits einen Druck auf die Kabel ausübt.

Die Montagevorrichtung 2 in der zweiten Ausgestaltung ist ebenfalls einfach und kompakt aufgebaut und schraubenlos montierbar. Die Halterung 21 und die Andruckplatte 23 sind je einstückig aus einem band- oder plattenförmigen Stahlelement gefertigt und können mit wenigen Handgriffen zusammengesetzt werden. Die Befestigung der Spiralfeder 22 erfolgt ohne zusätzliches Montagemittel.

Die Montagevorrichtung 2 kann praktisch, mit einem Handgriff montiert werden, indem wenigstens ein in den Kabelkanal 5 oder in die Kabelpritsche 6 eingelegtes Kabel 90 zwischen den Seitenteilen 211 mittels der Andruckplatte 23 erfasst und nach unten gedrückt wird, so dass die Spiralfeder 22 soweit gespannt wird, bis die Fussteile 213 durch Öffnungen 510; 601 im Kabelkanal 5 oder in einer Sprosse 61 hindurch geführt oder an einer Abkantung einer Sprosse 61 eingehängt werden können. Die Befestigung des Kabels 90 und der Montagevorrichtung 2 erfolgen somit in einem Arbeitsgang.

Die erfindungsgemässen Sprossen 61 erlauben ferner die Installation weiterer Montagevorrichtungen.

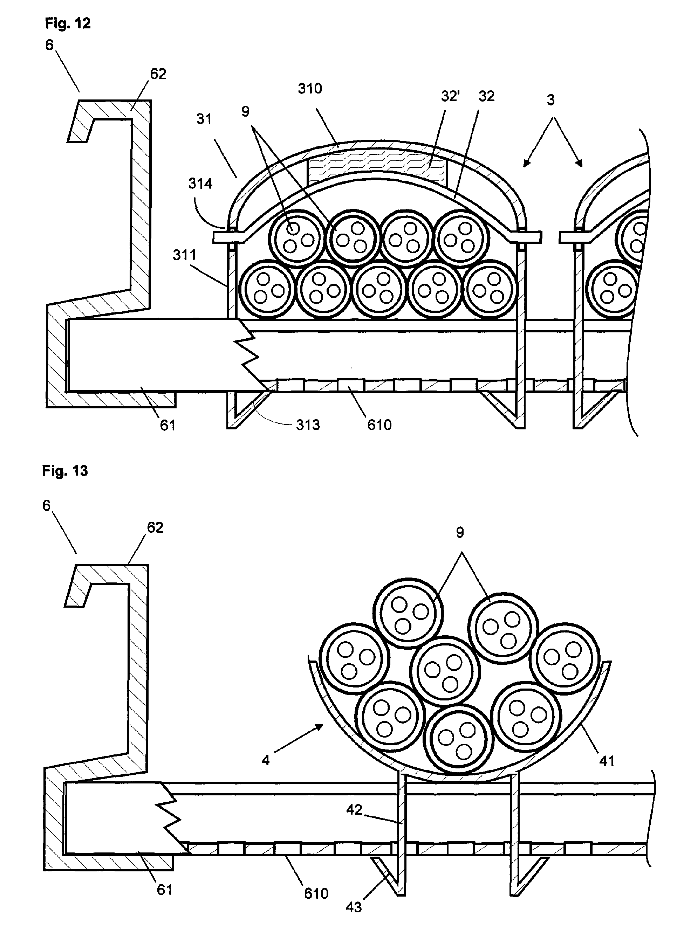

Figur 12 zeigt eine schraubenlos mit einer Sprosse 61 verbundene Montagevorrichtung 3 in einer dritten Ausgestaltung. Die Montagevorrichtung 3 weist eine U-profiloder klammerförmige Halterung 31 mit zwei Seitenteilen 311 auf, die einerseits durch ein Mittelteil 310 miteinander verbunden sind, und die andererseits je ein mit der Kabelführungsvorrichtung 5 bzw. 6 formschlüssig verbindbares elastisches Form- bzw. Fussteil 313 aufweisen. Zwischen den beiden Seitenteilen 311 ist eine Blattfeder 32 in Öffnungen 314 gehalten. Die L- oder hakenförmig ausgestalteten Fussteile 313 können durch Öffnungen 601 in einem Kabelkanal 5 oder in einer Sprosse 61 eingeschoben und am angrenzenden Rand 5101, 6101 der Öffnungen 510; 601 eingehängt werden. Dadurch wird die Blattfeder 32 durch die zwischen den Seitenteilen 311 erfassten Kabel 9 gespannt, so dass die Fussteile 313 fest an die Sprosse 61 angedrückt werden. Zu beachten ist, dass die Fussteile 313 nach innen gegeneinander gerichtet sind, so dass die Montage weiterer Montagevorrichtungen 3 in benachbarten Öffnungen 601 nicht behindert wird.

In einer vorzugsweisen Ausgestaltung ist zwischen der Blattfeder 32 und dem Mittelteil 310 ein elastisches Kissen 32' beispielsweise ein Gummikissen vorgesehen, das bei der Installation der Montagevorrichtung 3 gespannt wird. Anstelle der Blattfeder 32 kann daher auch hier eine verschiebbar gelagerte Andruckplatte (siehe Figur 10) verwendet werden.

Figur 13 zeigt eine schraubenlos befestigte, erfindungsgemässe Gegenwanne 4 mit einem der Aufnahme von Kabel 9 dienenden Mittelstück 41, das über zwei Seitenteile 42 mit elastischen Formteilen 43 versehen ist. Das Einsetzen und Arretieren der Gegenwanne 4 erfolgt in gleicher Weise wie bei der Halteklammer 3. Die beiden Formteile 43 sind hier nicht gegeneinander geneigt, um eine erhöhte Stabilität zu erzielen.

Die erfindungsgemässen Montagevorrichtungen 1, 2 wurden in bevorzugten Ausgestaltungen beschrieben und dargestellt.

Anhand der erfindungsgemässen Prinzipien sind jedoch weitere fachmännische Ausgestaltungen realisierbar. Die Montagevorrichtungen 1, 2, 3 können aus Metall oder Kunststoff gefertigt werden. Ferner kann die Form der Vorrichtungsteile, insbesondere der Halte- und Arretierteile, entsprechend den Öffnungen 501, 601 in den Kabelkanälen 5 oder entsprechend der Ausgestaltung der Sprossen 61 gewählt werden.

## Patentansprüche

1. Montagevorrichtung (1; 2; 3), geeignet zur lösbaren Verbindung mit einer Kabelführungsvorrichtung (5; 6), insbesondere einer Kabelbahn (5) oder einer mit Sprossen (61) versehenen Kabelpritsche (6), sowie zum Halten und/oder Ordnen wenigstens eines in der Kabelführungsvorrichtung (5; 6) geführten Kabels (90; 91, 92), **dadurch gekennzeichnet, dass** wenigstens ein einoder mehrseitig formschlüssig mit einem Randstück (5101; 6101, 6102) der Kabelführungsvorrichtung (5; 6) verbindbares Formteil (12, 14; 213; 313) und wenigstens ein Federteil (11, 13; 22; 32; 32') vorgesehen sind, mittels dessen das Formteil (12, 14; 213; 313) gegen das Randstück (5101; 6101, 6102) anpressbar ist, wodurch die Montagevorrichtung (1; 2; 3) schraubenlos fixierbar ist.

2. Montagevorrichtung (1), **dadurch gekennzeichnet, dass** ein erstes Federteil (11) ein elastisches, ein oder mehrteiliges Keilelement ist, das durch eine in der Kabelführungsvorrichtung (5; 6) vorgesehene, an das Randstück (5101; 6101) angrenzende Öffnung (510; 601) in den zur Führung der Kabel (90, 91) dienenden Bereich der Kabelführungsvorrichtung (5; 6) einführbar und derart mit wenigstens einem durch die Öffnung (510; 601) führbaren Arretierelement (12) und wenigstens einem nicht durch die Öffnung (510; 601) führbaren Fusselement (13) versehen ist, dass nach der Montage der Vorrichtung (1) das Arretierelement (12) und das Fusselement (13) das Randstück (5101; 6101) an dessen Ober- bzw. Unterseite (511; 512) überlappen, und ein dazwischen liegendes erstes Formteil (14) innerhalb der Öffnung (510; 601) mittels des ersten Federteils (11) seitlich gegen das Randstück (5101; 6101) angepresst wird.

3. Montagevorrichtung (1) nach Anspruch 2, **dadurch gekennzeichnet, dass** die als zweite Federteile dienenden, elastischen Fusselemente (13) derart gegen die als zweite Formteile dienenden Arretierelemente (12) geformt sind, dass diese nach dem Montieren der Vorrichtung (1) von den Fusselementen (13) gegen die Oberseite (511) des Randstücks (5101; 6101) gepresst werden.

4. Montagevorrichtung (1) nach Anspruch 2 oder 3, mit einer vorzugsweise symmetrischen Form und/oder bestehend aus einem Kunststoffkörper oder einem einstückigen, federelastischen Stahlelement.

5. Montagevorrichtung (1) nach Anspruch 4, **dadurch gekennzeichnet, dass** das wenigstens eine Arretierelement (12b) durch Verformung oder Biegung des band- oder plattenförmigen Stahlelements geschaffen ist, oder dass oberhalb der Fusselemente (13a) wenigstens ein seitlicher Einschnitt (15a) in das band- oder plattenförmige Stahlelement eingearbeitet und dessen oben an den Einschnitt (15a) anliegendes Teil zur Bildung des Arretierelements (12a) nach aussen gebogen ist.

6. Montagevorrichtung (2; 3) nach Anspruch 1, **dadurch gekennzeichnet, dass** eine Halterung (21; 31) mit zwei Seitenteilen (211; 311) vorgesehen ist, die einerseits durch ein Mittelteil (210; 310) miteinander verbunden sind und die andererseits je ein mit der Kabelführungsvorrichtung (5; 6) formschlüssig verbindbares Fuss- bzw. Formteil (213; 313) aufweisen und zwischen denen das Federteil (22; 32) derart gehalten ist, dass ein zwischen den Seitenteilen (211; 311) gehaltenes Kabel (90) direkt oder mittels einer verschiebbar gelagerten Andruckplatte (23) erfasst und gegen die Kabelführungsvorrichtung (5; 6) gedrückt werden kann, wodurch die Formteile (213; 313) gegen das Randstück (5101; 6101, 6102) angepresst und gehalten werden.

7. Montagevorrichtung (2; 3) nach Anspruch 6, **dadurch gekennzeichnet, dass** die Formteile (213; 313) mit einer Sprosse (61), wie einer C- oder Kombisprosse, der Kabelführungsvorrichtung (6) formschlüssig verbindbar oder durch eine Öffnung (510; 601) einer Kabelbahn (5) oder der Sprosse (61) hindurch führbar und mit dem Randstück (5101; 6101) formschlüssig verbindbar sind.

8. Montagevorrichtung (2) nach Anspruch 6 oder 7, **dadurch gekennzeichnet, dass** in das Mittelteil (210) und die Andruckplatte (23) je ein Halteelement (212; 232) eingearbeitet ist, mittels denen die Enden des Federteils (22), einer Blatt oder Spiralfeder, gehalten sind oder dass das Federteil (32) eine in Öffnungen (314) der Seitenteile (311) gehaltene, gegebenenfalls mittels eines elastischen Kissens (32') gestützte Blattfeder ist.

9. Montagevorrichtung (2) nach Anspruch 6, 7 oder 8, **dadurch gekennzeichnet, dass** in die Seitenteile (211) ein vorzugsweise T-förmiger Führungsschlitz (214) eingearbeitet ist, in den mit der Andruckplatte (23) verbundene Führungselemente (231) eingeführt sind, wobei die Führungselemente (231) vorzugsweise aus einem Steg (2311) und einem den Randbereich des Führungsschlitzes (214) überlappenden Kopfstück (2312) bestehen.

10. Montagevorrichtung (2; 3) nach einem der Ansprüche 6 bis 9, **dadurch gekennzeichnet, dass** die vorzugsweise U-Profil-förmige Halterung (21) aus einem band- oder plattenförmigen Stahlelement geformt ist.
